# EUROPÄISCHE PATENTANMELDUNG

(11) **EP 1 741 738 A1**
(43) Veröffentlichungstag der Anmeldung: **10.01.2007**
(21) Anmeldenummer: 06013079.6
(22) Anmeldetag: 24.06.2006
(51) Int. Cl.: C08G 63/66, C08G 18/42

(54) **PUR-Polyesterweichschaumstoffe auf Basis von Polyetheresterpolyolen**

(30) Priorität: 08.07.2005 DE 102005031975
(71) Anmelder: Bayer MaterialScience AG, 51368 Leverkusen (DE)
(72) Erfinder: Nefzger, Hartmut, Dr., 50259 Pulheim (DE); Klesczewski, Bert, Dr., 40237 Düsseldorf (DE); Pischedda, Eva, 41542 Dormagen (DE); Otten, Manduela, 51375 Leverkusen (DE)

(57) **Zusammenfassung**

Die vorliegende Erfindung betrifft Polyetheresterpolyole, ein Verfahren zu ihrer Herstellung, eine Mischung enthaltend die erfindungsgemäßen Polyetheresterpolyole, ein Verfahren zur Herstellung der Mischung, ein Verfahren zur Herstellung eines PUR-Polyesterweichschaumes mit Hilfe der Mischung enthaltend die erfindungsgemäßen Polyetheresterpolyole, den PUR-Polyesterweichschaum, ein Verfahren zur Herstellung von Textil- und/oder Druck-Schaumstoffverbundstoffen enthaltend den PUR-Polyesterweichschaumstoff sowie die aus diesem Verfahren erhältlichen Textil- und/oder Druck-Schaumstoffverbundstoffe.

## Beschreibung

Die vorliegende Erfindung betrifft Polyetheresterpolyole, Verfahren zu ihrer Herstellung, Mischungen enthaltend erfindungsgemäße Polyetheresterpolyole, Verfahren zur Herstellung solcher Mischungen, Verfahren zur Herstellung von PUR-Polyesterweichschaumstoffen mit Hilfe von Mischungen enthaltend erfmdungsgemäße Polyetheresterpolyole, PUR- Polyesterweichschaumstoffe, Verfahren zur Herstellung von Textil- und/oder Druck-Schaumstoffverbundstoffen enthaltend solche PUR-Polyesterweichschaumstoffe sowie die aus diesem Verfahren erhältlichen Textil- und/oder Druck-Schaumstoffverbundstoffe.

Polyesterpolyolbasierte Schaumstoffe unterteilen sich in konventionelle Schaumstoffe, Textilschaumstoffe und halb-harte Schaumstoffe. Hierbei bestimmt die chemische Struktur des verwendeten Polyesterpolyols weitgehend die Eigenschaften des daraus hergestellten Schaumstoffes. Polyesterpolyole werden entsprechend dem Stand der Technik durch Polykondensation von überwiegend bifunktionellen, kurzkettigen Polyolen, die Hydroxylzahlen von mehr als 750 mg KOH/g aufweisen, mit überwiegend bifunktionellen Polycarbonsäuren hergestellt. Durch Mitverwendung geringer Anteile an trifunktionellen Bausteinen, meist auf der Polyolseite, kommen jedoch überwiegend Polyesterpolyole zum Einsatz, deren zahlenmittlere Funktionalitäten zwischen 2 und 3 liegen, wie im Polyurethane Handbook, Günter Oertel (Editor), 2nd ed. 1993, Hanser Publishers, Munich, Vienna, New York, S. 201 beschrieben.

Ein Nachteil der Polyesterpolyole gegenüber Polyetherpolyolen bei der Verarbeitung ist deren deutlich erhöhte Viskosität.

In bestimmten Anwendungen kommen dennoch polyesterbasierte Weichschaumstoffe zur Anwendung. Dies gilt besonders für die Bereiche, in denen der Schaumstoff durch einen Flammkaschierungsprozess mit anderen Materialien verbunden wird. Eine typische Anwendung dieser Art liegt bei der Herstellung von Dachhimmeln im Automobilbereich vor. Hierbei wird der PUR-Polyesterweichschaumstoff durch Zuführung von Wärme an der Oberfläche angeschmolzen und in diesem Zustand durch Anpressen eines Textils mit demselben verklebt. Dieser Prozess ist mit reinen, polyetherbasierten Schaumstoffen nicht möglich wie auch bereits in EP-A1 1 108 736 beschrieben ist.

An einen im Automobilbereich einsetzbaren Polyesterweichschaumstoff werden bezüglich seiner Struktur erhöhte Anforderungen gestellt. So dürfen in diesem Bereich eingesetzte PUR-Polyesterweichschaumstoffe keine Lunker aufweisen, da derartige Fehlstellen an der Oberfläche sichtbar wären und somit minderwertiges, unbrauchbares Material vorläge.

Weiterhin müssen diese flammkaschierbaren, polyesterbasierten Weichschaumstoffe den in Automobilanwendungen vorgeschriebenen Brandtest, gemäß FMVSS 302 bestehen. Hierzu können beispielsweise die dem Fachmann bekannten bei Raumtemperatur flüssigen Flammschutzmittel eingesetzt werden. Solche Flammschutzmittel sind Chloralkyl(phosphate) oder -phoshite, oder Gemische, z.B. Tris(2-Chlorpropyl)phosphat.

Nachteilig an derartigen Flammschutzmitteln ist jedoch, dass sie beim Flammkaschierungsprozess zu unerwünschter Abgasentwicklung führen, wobei das Abgas aufgrund seiner teilweisen toxischen Bestandteile durch vergleichsweise aufwendige technische Vorrichtungen abgesaugt werden muss.

Diesbezüglich weit weniger problematisch sind feste halogen- und organophosphorfreie Flammschutzmittel, wie das anorganische Ammoniumpolyphosphat. Ein mit einem festen Flammschutzmittel angereichertes Polyesterpolyol hat jedoch den Nachteil, dass die Viskosität deutlich erhöht wird, so dass die ohnehin schwierigere Verarbeitung der Polyesterpolyole gegenüber Polyetherpolyolen zusätzlich erschwert wird.

Ein scheinbar naheliegender Ausweg aus dieser Situation ist die Verwendung von Polyetherpolyolen, um somit niedrigviskosere, damit leichter pumpbare Formulierungen zu erhalten, die auch einen höheren Feststoffgehalt erlauben. Beispielsweise sind Polyesterpolyole mit Viskositätswerten von über 8000 mPas (bei 25°C) diesbezüglich ungeeignet. Jedoch zeigen auch polyesterbasierte Weichschaumstoffe, die nur geringe Anteile an Polyether aufweisen, große Nachteile bei der Schaumbildung, da diese Polyether nicht mit den Polyestern mischbar sind wie es im Polyurethane Handbook, Günter Oertel (Editor), 2nd ed. 1993, Hanser Publishers, Munich, Vienna, New Y-ork, S. 201 beschrieben ist.

In EP-A1 035 687 wird die Verwendung von Lösungen, die durch die Umsetzung von Diisocyanaten mit diprimären Diolen einer speziellen Struktur in höhermolekularen Polyetherpolyolen mit überwiegend sekundären Hydroxylgruppen hergestellt werden, beschrieben. Auf diese Weise hergestellte Schaumstoffe weisen jedoch Mängel in ihrer Alterungsbeständigkeit auf, da sie nur schlechte Rückstellfähigkeiten nach Dauerbeanspruchung zeigen.

EP-A1 025 549 beschreibt eine Zusammensetzung aus Hydroxypivalinsäure-neopentylglykolester zu Polyethern, um eine gute Kaschierfähigkeit und eine verbesserte Hochfrequenzschweißbarkeit zu erreichen. Nachteilig bei den aus diesen Zusammensetzungen erhaltenen Schäumen ist jedoch der erhöhte Druckverformungsrest, der nach mechanischer Belastung zu einer unerwünschten dauerhaften Verformung führt.

Chakrabarti et al. beschreiben in US 5,891,928 und US 5,900,087 eine Zusammensetzung aus Polyethern mit aliphatischen Diolen oder Polymerdiolen die als Polyolformulierungen für eine verbesserte Flammkaschierbarkeit eingesetzt werden sollen. Nachteilig bei diesen Systemen sind die geringen Schälfestigkeiten der erhaltenen Polyetherschaumstoffe gegenüber Polyesterschaumstoffen.

In EP-A 1 108 736 wird beschrieben, dass man als Flammkaschierzusatzstoff zu Polyethern mindestens bifunktionelle, niedermolekulare, aromatische Polyole hinzugeben muß. Der Zusatz kann sowohl aus aromatischen Polyesterpolyolen wie auch aromatischen Polyetherpolyolen bestehen. Die möglichen einsetzbaren Polyesterpolyole werden aus Phthalsäure, Terephthalsäure, Isophthalsäure, Trimellitsäure und Trimesinsäure mit Glykolen wie Ethylenglykol und Propylenglykol erhalten. Diese aromatischen Polyesterpolyole weisen Molmassen im Bereich von 150 bis 1200 Da, bevorzugt 150 bis 1000 Da auf. Solche Polyole mit Flammkaschierzusatzstoffen enthalten jedoch mehrere Nachteile, etwa die durch den Flammkaschierzusatzstoff erhöhte Viskosität, wobei die Flammkaschierbarkeit nicht vollständig das Niveau von polyesterbasierten Materialien erreicht. Diese Nachteile können nur teilweise durch einen erhöhten technischen Aufwand, wie z.B. eine getrennte Dosierung unter Verwendung leistungsstärkerer Pumpaggregate behoben werden.

Die Aufgabe der vorliegenden Erfindung besteht somit in der Bereitstellung von Polyetheresterpolyolen, die bei Raum- und Verarbeitungstemperatur mischbare, pumpbare und deutlich niedrigviskosere Mischungen ermöglichen als reine Polyesterpolyole, so dass mit Hilfe dieser Mischung flammkaschierbare PUR-Weichschaumstoffe herstellbar sind, deren Eigenschaftsprofil dem des Standes der Technik entspricht.

Diese Aufgabe wird durch Polyetheresterpolyole mit einer Hydroxylzahl im Bereich von 60 bis 160 mg KOH / g und einer Viskosität von ≤500 mPas bei 75°C enthaltend Wiederholungseinheiten abgeleitet von
I) aliphatischen Polycarbonsäuren,
II) Polyolen mit einer Hydroxylzahl von größer 550 mg KOH / g und
III) ethergruppenaufweisenden Polyolen mit einer Hydroxylzahl von weniger als 120 mg KOH / g gelöst.

Vorteilhaft ist es, wenn die Polyole der Gruppe II bei den erfindungsgemäßen Polyetherester ausgewählt sind aus der Gruppe der aliphatischen Diole mit α, ω-endständigen Hydroxylgruppen und der Polyole mit einer Hydroxylfunktionalität größer als 2.

Vorteilhaft ist es, wenn die Polyole der Gruppe III der erfindungsgemäßen Polyetheresterpolyole einen Ethylenoxidanteil von 30 bis 85 Gew.-% sowie eine Funktionalität von 1,8 bis 3,5 aufweisen.

Vorteilhafterweise liegt die Hydroxylzahl der erfindungsgemäßen Polyetheresterpolyole im Bereich von 80 bis 125 mg KOH / g.

Vorteilhafterweise sind die erfindungsgemäßer Polyetheresterpolyole in Mengen von mindestens 5 Gew.-% mit Poly(diethylenglykol)adipat bei Raumtemperatur mischbar.

Ein weiterer Gegenstand der Erfindung ist ein Verfahren zur Herstellung der Polyetheresterpolyole nach einem der Ansprüche 1 bis 4, wobei die Komponenten der Gruppen I, II und III unter Abspaltung von Wasser oder eines monofunktionellen C₁-C₄ Alkohols polykondensiert werden.

Vorteilhaft ist das Verfahren zur Herstellung der erfindungsgemäßen Polyetheresterpolyole, wenn die Polykondensation bei Drücken im Bereich von unter 50 mbar bis Normaldruck und Temperaturen größer 150°C abläuft.

Vorteilhaft ist das Verfahren zur Herstellung des erfindungsgemäßen Polyetheresters, wenn alle Komponenten der Gruppen I, II und III gleichzeitig vorgelegt werden und erst unter Normaldruck unter Verwendung eines Schutzgases bei Temperaturen im Bereich von 120 bis 220°C, besonders bevorzugt 170 bis 205°C, solange kondensiert wird, bis kein Reaktionswasser mehr abdestilliert und anschließend, gegebenenfalls nach Zusatz eines Veresterungskatalysators der Druck im Verlauf von 2 bis 6 Stunden auf unterhalb von 50 mbar vermindert wird und schließlich bei Temperaturen im Bereich von 180 bis 220°C und vollem Wasserstrahlvakuum polykondensiert wird, bis eine Säurezahl von unter 1,5 mg KOH / g erhalten wird.

Ein weiterer Gegenstand der Erfindung sind bei Raumtemperatur klare Mischung enthaltend ≥50 Gew.-Teile an Poly(diethylenglykol)adipat und ≤50 Gew.-Teilen an erfindungsgemäßen Polyetheresterpolyolen.

Ein weiterer Gegenstand der Erfindung ist ein Verfahren zur Herstellung solcher Mischungen, enthaltend erfindungsgemäße Polyetheresterpolyole durch Mischen des Poly(diethylenglykol)adipats mit den erfindungsgemäßen Polyetheresterpolyolen.

Ein weiterer Gegenstand der Erfindung ist ein Verfahren zur Herstellung eines PUR-Polyesterweichschaumstoffes umfassend die Schritte
a) Umsatz der Mischung, enthaltend erfindungsgemäße Polyetheresterpolyole mit
b) einer polyisocyanathaltigen Komponente,
c) einem Treibmittel,
d) einem oder mehreren Katalysatoren und
e) gegebenenfalls Flammschutzmitteln und/oder weiteren Hilfs- und Zusatzstoffen.

Ein weiterer Gegenstand der Erfindung ist ein PUR-Polyesterweichschaumstoff erhältlich nach dem Verfahren, in dem die Mischung enthaltend erfindungsgemäße Polyetheresterpolyole, eingesetzt wird.

Ein weiterer Gegenstand der Erfindung ist ein Verfahren zur Herstellung eines Verbundmaterials, bei dem der PUR-Polyesterweichschaumstoff erhältlich nach dem Verfahren, in dem die Mischung enthaltend erfindungsgemäße Polyetheresterpolyole eingesetzt wird, mit einem Textil oder einer Deckschicht über ein Oberflächenschmelzverfahren oder einem geeigneten Klebeverfahren kaschiert wird. Gegenstand der Erfindung sind auch die mit dem erfindungsgemäßen Verfahren erhältlichen Textil- Schaumstoffverbundmaterialien (Kaschate). Diese sind in üblicher Verarbeitung durch Zusammenführen der Schaumstoffschmelzschicht mit der textilen Deckschicht herstellbar. Hierzu werden die in erfindungsgemäßen Verfahren eingesetzten Polyurethanschaumstoffe nach einer Kurzzeitbeflammung mit einem Textil aus Polyamid, Polyester, Baumwolle oder Lederbezügen mit bleibend hoher Schälfestigkeit verbunden. Üblich ist das Aufbringen eines Charmeuse-Abschlussgewebes auf den Schaumstoff. Eine weitere Herstellmethode für die erfindungsgemäßen Kaschate ist das Verkleben der Schaumstoffe mit der textilen Deckschicht mit Schmelzklebemitteln über die an sich bekannte Schmelzklebetechnik.

Ein weiterer Gegenstand der Erfindung ist ein Textil- und/oder Deckschicht-Schaumstoffverbund, enthaltend PUR-Polyesterweichschaumstoff, erhältlich nach dem Verfahren, in dem die Mischung enthaltend erfindungsgemäße Polyetheresterpolyole eingesetzt werden.

Die erfindungsgemäßen Polyetheresterpolyole sind dadurch gekennzeichnet, dass sie aus drei Hauptaufbaukomponenten bestehen: Erstens aus einer aliphatischen Polycarbonsäure, zweitens aus Polyol mit einer Hydroxylzahl größer 550 mg KOH / g und drittens aus ethergruppenaufweisenden Polyolen mit einer Hydroxylzahl kleiner 120 mg KOH / g.

Die aliphatischen Polycarbonsäuren sind ausgewählt aus der Gruppe von Bernsteinsäure, Glutarsäure und Adipinsäure, oder Mischungen dieser Säuren oder ihrer Anhydride oder der Ester mit monofunktionellen C₁-C₄ Alkoholen. Bevorzugt eingesetzte Alkohole für die Ester der aliphatischen Polycarbonsäuren sind ausgewählt aus der Gruppe von Methanol, Ethanol, 1-Propanol, Isopropanol, 1-Butanol, 2-Butanol und tert.-Butanol. Besonders bevorzugte Säuren die für die aliphatischen Polycarbonsäuren verwendet werden sind ausgewählt aus der Gruppe von Bernsteinsäure, Glutarsäure und Adipinsäure, besonders bevorzugt ist Adipinsäure.

Die Polyole der Gruppe II mit einer Hydroxylzahl größer 550 mg KOH/g sind ausgewählt aus der Gruppe von unverzweigten aliphatischen Diole mit α,ω-endständigen Hydroxylgruppen, welche gegebenenfalls bis zu drei Ethergruppen aufweisen können und Polyolen mit einer Hydroxylfunktionalität größer 2. Bevorzugte Polyole aus der Gruppe II sind 1,2-Ethylenglykol, 1,3-Propylenglykol, 1,4-Butylenglykol, 1,6-Hexylenglykol, Diethylenglykol, Triethylenglykol und Tetraethylenglykol. Besonders bevorzugt ist Diethylenglykol. Bevorzugte Polyole mit einer Hydroxylfunktionalität größer als 2 sind ausgewählt aus der Gruppe von 1,1,1-Trimethylolpropan, Pentaerythrit und Glycerin.

Die ethergruppenaufweisenden Polyole der Gruppe III mit einer Hydroxylzahl kleiner 120 mg KOH/g sind ausgewählt aus der Gruppe der durch ringöffnende Polymerisation aus Ethylen- und Propylenoxid hergestellten Polyetherpolyole. Hierbei können selbstverständlich sowohl die basenkatalysierten Varianten als auch die unter Verwendung der Doppelmetallkatalyse hergestellten Typen eingesetzt werden. Als Starter für derartige Polyetherpolyole kommen beispielsweise bifunktionelle und trifunktionelle Diole, deren Gemische, sowie Wasser in Frage. Erfindungsgemäße Polyetherpolyole umfassen auch Copolyether, dadurch gekennzeichnet, dass mehr als ein durch ringöffnende Polymerisation polymerisierbares aliphatisches Epoxid eingesetzt werden kann, wobei sowohl ein blockweiser als auch ein statistischer Einbau der Epoxide umfasst wird. Bevorzugt sind Copolyether, die unter Verwendung von Ethylen- und Propylenoxid in überwiegend blockweiser Ausführung eingesetzt werden, wobei bevorzugt zuerst Propylen- und dann Ethylenoxid verwendet wird. Bevorzugt weisen die Polyole der Gruppe III Ethylenoxidanteile von 33 bis 85 Gew.-% Ethylenoxid und des Weiteren Funktionalitäten von 1,80 bis 3,5 bevorzugt 1,90 bis 3,0 auf. Selbstverständlich können auch Gemische aus mehr als einem Polyetherpolyol als ethergruppenaufweisende Polyole der Gruppe III eingesetzt werden.

Die Herstellung der Polyetheresterpolyole erfolgt vorzugsweise durch Polykondensation unter Abspaltung von Wasser, gegebenenfalls auch unter Abspaltung eines monofunktionellen C₁-C₄-Alkohols. Diese Umsetzung erfolgt anfangs bei Normaldruck, im späteren Verlauf bei vermindertem Druck, zuletzt bei Drücken von unter 50 mbar und Temperaturen von mehr als 150°C, bevorzugt 170 bis 250°C. Die Reaktion kann katalysiert oder unkatalysiert erfolgen. Als typischer Katalysator für die wasserabspaltende Polykondensation sei stellvertretend Zinndichlorid genannt.

Selbstverständlich kann diese Umsetzung auch mit Hilfe eines Schleppmittels, wie z.B. Toluols, Xylol oder Dioxan erfolgen; bevorzugt ist jedoch die Umsetzung in Substanz. Zur Herstellung der Polyetheresterpolyole können selbstverständlich ein oder mehrere dem Fachmann bekannte Veresterungs- oder Umesterungskatalysatoren verwendet werden.

Vorzugsweise werden alle Reaktionskomponenten gleichzeitig vorgelegt und zunächst bei Normaldruck unkatalysiert unter Verwendung eines Schutzgases bis zu einer Reaktionstemperatur im Bereich von 120 bis 220°C, besonders bevorzugt 170 bis 205°C unter Abspaltung von Wasser erhitzt. Nach dieser Normaldruckphase verringert man, gegebenenfalls nach Zusatz eines Veresterungskatalysators, den Druck im Verlauf von 2 bis 6 Stunden auf unterhalb von 50 mbar, zuletzt auf volles Wasserstrahlvakuum und vervollständigt die Reaktion bis zum Erreichen einer Säurezahl von unter 1,5 mg KOH/g.

Alternativ können die Polyetheresterpolyole auch durch das Stickstoffblasverfahren hergestellt werden, bei dem das Kondensat durch einen Stickstoffstrom aus dem Reaktionsgefäß ausgetragen wird und wie es in J. H. Saunders und K.C. Frisch in Polyurethanes: Chemistry and Technology, Part I. Chemistry, Interscience Publishers John Wiley&Sons, New York 1962, S.45, beschrieben ist.

Die Molmasse der Polyetheresterpolyole wird hierbei durch Wahl des Unterschusses an Carboxylgruppen im Vergleich zu Hydroxylgruppen gesteuert. Erfindungsgemäße Polyetherester weisen hierbei Hydroxylzahlen von 60 bis 160 mg KOH/g auf, bevorzugt sind 80 bis 125 mg KOH/g.

Erfindungsgemäße Polyetheresterpolyole sind weiterhin dadurch charakterisiert, dass die bei 75°C gemessene Viskosität 500 mPas nicht übersteigt und das sie für die Herstellung von PUR-Weichschaumstoffen mit einem handelsüblichen, zur Herstellung von Polyesterweichschaumstoffen verwendeten Poly(diethylenglykol)adipat im Mischungsverhältnis von ≤50 Gew.-Teilen an erfindungsgemäßem Polyetherester und ≥50 Gew.-Teilen Poly(diethylenglykol)adipat bei Raumtemperatur klar mischbar sind. Besonders bevorzugt sind Poly(diethylenglykol)adipate, wie Desmophen^{®} 2200B der Fa. Bayer MaterialScience AG mit einer Hydroxylzahl von 60 mg KOH/g, einer Viskosität von 1000 mPas (75°C) und einem Äquivalentgewicht von 935 g/mol.

Zur Herstellung von PUR-Polyesterweichschaumstoffen werden die erfindungsgemäßen Polyetheresterpolyole mit Poly(diethylenglykol)adipat in einer Mischung aus 5 bis 50 Gew.-Teilen an erfindungsgemäßen Polyetherester und 50 bis 95 Gew.-Teilen Poly(diethylenglykol)adipat vermischt. Bevorzugt ist ein Verhältnis von 5 bis 30 Gew.-Teilen an erfindungsgemäßen Polyetheresterpolyolen und 70 bis 95 Gew.-Teilen Poly(diethylenglykol)adipat.

Diese Mischung kann anschließend zur Herstellung eines PUR-Polyesterweichschaumstoffes eingesetzt werden. Hierfür wird die Mischung mit einer isocyanathaltigen Komponente umgesetzt.

Unter isocyanathalitgen Komponenten sind organische Di- oder Polyisocyanate oder Polyisocyanatprepolymere zu verstehen. Als Di- oder Polyisocyanate kommen aliphatische cycloaliphatische, araliphatische, aromatische und heterocyclische Polyisocyanate in Frage, wie sie in Justus Liebigs Annalen der Chemie 562, (1949) 75 beschrieben werden, beispielsweise solche der Formel

Q(NCO)ₙ

in der
- n: eine ganze Zahl von 2 bis 4, vorzugsweise 2 und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeutet.

Bevorzugt sind Polyisocyanate, wie sie in DE-OS 28 32 253 beschrieben werden. Besonders bevorzugt eingesetzt werden in der Regel die technisch leicht zugänglichen Polyisocyanate, z.B. das 2,4- und 2,6-Toluylendiisocanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw vom 4,4'- und/oder 2,4'-Diphenylmethandiisocyanat ableiten. Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1400. Ganz besonders bevorzugt finden die unter dem Namen "polymeres Diphenylmethandiisocyanat" technisch erhältlichen Polyisocyanate mit einer höheren Funktionalität als 2,0 sowie aus ihnen hergestellte Prepolymere Verwendung.

Zu der Mischung, die den erfindungsgemäßen Polyetherester und das Poly(diethylenglykol)adipat enthält, wird für die Herstellung des Polyetheresters auch noch ein Treibmittel und ein Katalysator hinzugegeben. Die Treibmittel sind ausgewählt aus der Gruppe von Wasser, Kohlendioxid, insbesondere in flüssiger Form, C3-C6 Alkane, halogenierte Kohlenwasserstoffe, Carbonsäuren sowie Azoverbindungen, die während des Schäumprozesses Gase freisetzen. Bevorzugte C3-C6 Alkane sind Butane, n-Pentan, iso-Pentan, Cyclopentan sowie Hexane. Bevorzugte halogenierte Kohlenwasserstoffe sind Dichlormethan, Dichlormonofluormethan, Chlordifluorethane, 1,1-Dichlor, 2,2,2-Trifluorethan, 2,2-Dichlor-2-fluorethan, Difluormethan, Trifluormethan, Difluorethan, 1,1,1,2,-Tetrafluorethan, Tetrafluorethan ( R134 oder R 134a), 1,1,1,3,3-Pentafluorpropan (R 245fa), 1,1,1,3,3,3- Hexafluorpropan (R356), 1,1,1,3,3-Pentafluorbutan (R365mfc), Heptafluorpropan, Schwefelhexafluorid oder Gemische dieser halogenierten Kohlenwasserstoffe. Besonders bevorzugt sind Difluormethan, Trifluormethan, Difluorethan, 1,1,1,2,-Tetrafluorethan, Tetrafluorethan (R134 oder R 134a), 1,1,1,3,3-Pentafluorpropan (R 245fa), 1,1,1,3,3,3- Hexafluorpropan (R356), 1,1,1,3,3-Pentafluorbutan (R365mfc), Heptafluorpropan, Schwefelhexafluorid. Besonders bevorzugt werden diese Treibmittel mit Wasser eingesetzt. Ganz besonders bevorzugt ist Wasser als Treibmittel.

Als aminische Katalysatoren kommen u.a. in Betracht: N,N'-Dimethylpiperazin, Piperazin, N-Methyl-N'-dimethylaminoethylpiperazin, Bis(dimethylamindiethylaminoethyl)adipat, N-Methylmorpholin, Triethylamin, Tributylamin, N-Ethyl-morpholin, 1,4-Diazabicyclooctan, N,N'-Dimethylbenzylamin, N,N'-Diethylbenzylamin, N,N-Dimethylcyclohexylamin, N,N,N',N'-Tetramethylethylendiamin, Pentamethyldiethylentriamin, sowie höhere Homologe, mono- und bicyclisch Amidine, wie z.B. Bis-(dialkylamino)alkylether, z.B. 2,2'-Bis-(dimethylaminoethyl)ether, 2-Methylimidazol, 1,2-Dimethylimidazol, N,N,-Dimethyl-β-phenylethylamin, N,N,N',N'-tetramethyl-1,3-Butandiamin.

Als Metallionen enthaltende Katalysatoren kommen u.a. in Betracht:

Zinn-II-ethylhexanoat, Dibutylzinndilaurat, Dibutylzinndiacetat, Dibutylzinnmaleat, Dioctylzinndiacetat, Dibutylzinndichlorid, Zinn-II-acetat, Zinn-II-octanoat, Zinn-II-laureat, Di-n-octyl-zinnmercaptid. Bei der Herstellung der PUR-Polyesterweichschaumstoffe können auch noch weitere Flammschutzmittel sowie Hilfs- und Zusatzstoffe eingesetzt werden.

Als Flammschutzmittel werden beispielsweise Ammoniumpolyphosphat, Trikresylphosphat, Tris(2-chlorethyl)phosphat, Tris(2-chlorpropyl)phosphat, Tris(2,3-dibromporpyl)phosphat, Tetrakis(2-chlorethyl)ethyldiphosphat, Dimethylmethanphosphonat, Diethanolaminomethylphosphonsäurediethylester, Tris(dipropylenglykol)phosphit, Tris(dipropylenglykol)phosphat, Bis(2-hydroxyethyl)ethylenglykoldiphosphat-bis(2-chlorethylester) sowie halogenhaltige, flammschützend wirkende Polyole verwendet. Weitere Beispiele von gegebenenfalls mitzuverwendenden Hilfs- und Zusatzstoffen sind Schaumstabilisatoren, sowie Zellregler, Reaktionsverzögerer, Stabilisatoren, Weichmacher, Farbstoffe und Füllstoffe sowie fungistatisch und bakteriostatisch wirksamen Substanzen. Diese werden meist der erfindungsgemäßen Mischung aus dem erfindungsgemäßen Polyesterpolyol und dem Poly(diethylenglykol)adipat in Mengen von 0 bis 10 Gewichtsteilen, bevorzugt 2 bis 6 Gewichtsteilen zugesetzt. Einzelheiten über Verwendungs- und Wirkungsweise dieser Hilfs- und Zusatzmittel sind in G. Oertel (Hrsg.): "Kunststoff-Handbuch", Band VII Carl Hanser Verlag, 3. Auflage, München 1993, S. 110-115 beschrieben.

Die Polyesterschaumstoffe werden üblicherweise hergestellt, indem die Mischung enthaltend das erfindungsgemäß Polyesterpolyol und das Poly(diethylenglykol)adipat mit dem Treibmittel, Katalysator sowie gegebenenfalls Flammschutzmittel und Hilfs- und Zusatzstoffe in üblicherweise in maschinellen Einrichtungen intensiv vermischt werden. Die Herstellung der Schaumstoffe kann sowohl kontinuierlich, etwa auf einer Transportbandanlage als auch diskontinuierlich erfolgen. Die Herstellung von Weichschaumstoffen ist dem Fachmann bekannt und beispielsweise in G. Oertel (Hrsg.):"Kunststoff-Handbuch Band VII, Carl Hanser Verlag, 3. Auflage, München 1993, S. 193-220 beschrieben.

Gegenstand der Erfindung sind auch unter Verwendung der erfindungsgemäßen Schaumstoffe hergestellte Textil-Schaumstoffverbundmaterialien (Kaschate). Diese sind in üblicher Verarbeitung durch Zusammenfügen der Schaumstoffschmelzschicht mit der textilen Deckschicht herstellbar. Hierzu werden die erfindungsgemäßen Polyether-Polyurethanschaumstoffe nach einer Kurzzeitbeflammung mit einem Textil aus Polyamid, Polyester, Baumwolle oder Lederbezügen mit bleibend hoher Schälfestigkeit verbunden. Üblich ist das Aufbringen eines Charmeuse-Abschlussgewebes auf dem Schaumstoff. Eine weitere Herstellmethode für die erfindungsgemäßen Kaschate ist das Verkleben der aus dem erfindungsgemäßen Polyetherester herstellbaren Schaumstoffes mit der textilen Deckschicht mit Schmelzklebermitteln über die an sich bekannte Schmelzklebetechnik oder mittels Dispersionsklebestoffen.

### Beispiele:

Beschreibung der verwendeten Rohstoffe:
1.) Aliphatische Polycarbonsäure:
Adipinsäure, techn.
Sebacinsäure, techn.
Pripol^{®} 1006: Handelsprodukt der Fa. Uniqema. Dimerfettsäure mit einer Säurezahl von 194-198 mg KOH/g.
2.) Polyol mit Hydroxylzahl von größer 550 mg KOH / g:
Diethylenglykol, techn.
1,1,1-Trimethylolpropan, techn. (TMP)
3.) ethergruppenaufweisendes Polyol mit einer Hydroxylzahl kleiner 120 mg KOH / g:
die Polyether sind der Tabelle 1 zu entnehmen

**Tabelle 1: Eigenschaften der eingesetzten Polyetherpolyole**

| | OHZ | f | EO-Anteil |
|---|---|---|---|
| Polyether 1 | 57 | 2 | 50 |
| Polyether 2 | 37 | 3 | 72 |
| Polyether 3*) | 28 | 2 | 30 |

| | | | |
|---|---|---|---|
| *): Vergleichsbeispiel | | | |

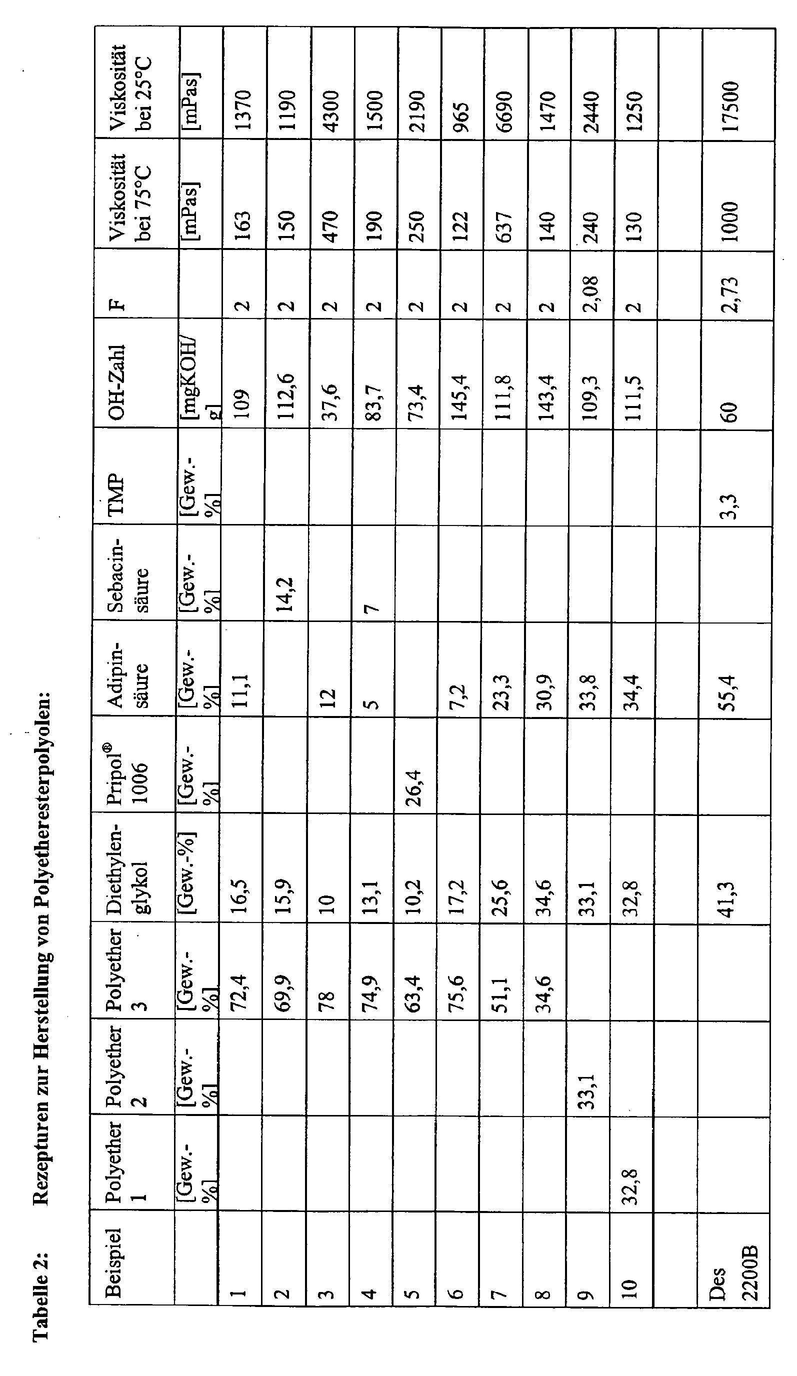

Als weiteres Kriterium für erfindungsgemäße Polyetheresterpolyole, die zur Verarbeitung in PUR-Weichschaumstoffen eingesetzt werden können, muss der Anteil an erfindungsgemäßem Polyetheresterpolyolen ≤50 Gew.-Teile und die Menge an Poly(diethylenglykol)adipat ≥50 Gew.-Teile in der Mischung sein, um eine bei Raumtemperatur klare Lösung zu erhalten.

Hierüber gibt Tabelle 3 Auskunft:

**Tabelle 3: Test auf Verträglichkeit mit Desmophen^{®} 2200B (Poly(diethylenglykol)adipat):**

| Beispiel | | Mischbarkeit mit Poly(diethylenglykoladipat) | | | | | | | |
|---|---|---|---|---|---|---|---|---|---|
| | | Raumtemperatur | | | | 50°C | | | |
| | | Mischungsverhältnis [Teile Polyetherester] | | | | | | | |
| | | 5 | 20 | 50 | 66 | 5 | 20 | 50 | 66 |
| 1 | | | | | | | | | |
| 2 | | nein | nein | nein | nein | nein | nein | nein | nein |
| 3 | | nein | nein | nein | nein | nein | nein | nein | nein |
| 4 | | nein | nein | nein | nein | nein | nein | nein | nein |
| 5 | | nein | nein | nein | nein | nein | nein | nein | nein |
| 6 | | nein | nein | | | nein | nein | | |
| 7 | | nein | nein | | | nein | nein | | |
| 8 | | nein | nein | | | nein | nein | | |
| 9 | | ja | ja | ja | | ja | ja | ja | |
| 10 | | ja | ja | ja | | ja | ja | ja | |

Es ist ersichtlich, dass lediglich die Beispiele 9 und 10 dieses Kriterium erfüllen und somit geeignet sind, als Polyolkomponente zur Herstellung von flammkaschierbaren PUR-Weichschaumstoffen eingesetzt zu werden.

Prüfung auf Eignung der Polyetheresterpolyole zur Herstellung von PUR-Polyester-Weichschaumstoffen:

Auf einer Verschäummaschine (Hennecke UBT) wurden über einen Mischkopf folgende Rezepturen dosiert, Tabelle 4:

**Tabelle 4: Schaumformulierungen und Schaumeigenschaften**

| Polyester Nr. aus Tab. 3: | | Vergleichsbeispiele | | | | Erfindungsgemäß |
|---|---|---|---|---|---|---|
| diethylenglykol)adipat | **[Tle.]** | 80 | 80 | 80 | | |
| 1 Poly( | **[Tle.]** | 20 | | | | |
| 6 | **[Tle.]** | | 20 | | | |
| 7 | **[Tle.]** | | | 20 | | |
| 9 | **[Tle.]** | | | | | 20 |
| Wasser | **[Tle.]** | 3 | 3 | 3 | | 3 |
| Stabilisator 9100¹ | **[Tle.]** | 0.8 | 0.8 | 0.8 | | 0.8 |
| Catalyst A30² | **[Tle.]** | 0.18 | 0.18 | 0.18 | | 0.18 |
| Catalyst A117³ | **[Tle.]** | 0.18 | 0.18 | 0.18 | | 0.18 |
| | | | | | | |
| TDI-65 | **[Tle.]** | 19.6 | 19.6 | 19.6 | | 19.6 |
| TDI-80 | **[Tle.]** | 19.6 | 19.6 | 19.6 | | 19.6 |
| Kennzahl | **[ ]** | 98 | 98 | 98 | | 98 |
| | | | | | | |

| Mechanische Eigenschaften: | | Kollaps | Kollaps | Kollaps | | |
|---|---|---|---|---|---|---|
| Rohdichte nach DIN EN ISO 3386-1-98 | **[kg m⁻³]** | | | | | 38,6 |
| Zugfestigkeit nach DIN EN ISO 1798 | **[kPa]** | | | | | 171 |
| Bruchdehnung nach DIN EN ISO 1798 | **[%]** | | | | | 392 |
| Stauchhärte 40% nach DIN EN ISO 3386-1-98 | **[kPa]** | | | | | 3,4 |
| DVR (50%) nach DIN EN ISO 1856-2000 | **[%]** | | | | | 2,8 |
| MVSS nach ISO 3795 (self extinguishing) | | | | | | Ja |
| Lunker | | | | | | Lunkerfrei |

| | | | | | | |
|---|---|---|---|---|---|---|
| ¹ Stabilisator 9100: Silbyk 9100 der Fa. Byk Chemie ² Catalyst A 30: Aminkatalysator A 30 der Fa. Rheinchemie ³ Catalyst A 117: Aminkatalysator A 117 der Fa. Rheinchemie | | | | | | |

## Patentansprüche

1. Polyetheresterpolyole mit einer Hydroxylzahl im Bereich von 60 bis 160 mg KOH / g und einer Viskosität von ≤500 mPas bei 75°C enthaltend Wiederholungseinheiten abgeleitet von
I) aliphatischen Polycarbonsäuren,
II) Polyolen mit einer Hydroxylzahl von größer 550 mg KOH / g und
III) ethergruppenaufweisenden Polyolen mit einer Hydroxylzahl von weniger als 120 mg KOH/g.

2. Polyetheresterpolyole nach Anspruch 1, wobei die Polyole der Gruppe II ausgewählt sind aus der Gruppe der aliphatischen Diole mit α, ω-endständigen Hydroxylgruppen und einer Hydroxylfunktionalität größer als 2.

3. Polyetheresterpolyole nach einem der Ansprüche 1 bis 2, wobei die Polyole der Gruppe III einen Ethylenoxidanteil von 30 bis 85 Gew.-% sowie eine Funktionalität von 1,8 bis 3,5 aufweisen.

4. Polyetheresterpolyole nach einem der Ansprüche 1 bis 3, wobei die Hydroxylzahl des Polyetheresters im Bereich von 80 bis 125 mg KOH / g liegt.

5. Polyetheresterpolyole nach einem der Ansprüche 1 bis 4, wobei diese in Mengen von mindestens 5 Gew.-% mit Poly(diethylenglykol)adipat bei Raumtemperatur mischbar sind.

6. Verfahren zur Herstellung von Polyetheresterpolyolen nach einem der Ansprüche 1 bis 5, wobei die Komponenten der Gruppen I, II und III unter Abspaltung von Wasser oder eines monofunktionellen C₁-C₄-Alkohols polykondensiert werden.

7. Verfahren nach Anspruch 6, wobei die Polykondensation bei Drücken im Bereich von unter 50 mbar bis Normaldruck und Temperaturen größer 150°C verläuft.

8. Das Verfahren nach Anspruch 7, wobei alle Komponenten der Gruppen I, II und III gleichzeitig vorgelegt werden und erst unter Normaldruck unter Verwendung eines Schutzgases bei Temperaturen im Bereich von 120 bis 220°C, besonders bevorzugt 170 bis 205°C, solange kondensiert wird bis kein Reaktionswasser mehr abdestilliert und anschließend, gegebenenfalls nach Zusatz eines Veresterungskatalysators der Druck im Verlauf von 2 bis 6 Stunden auf unterhalb von 50 mbar vermindert wird und schließlich bei Temperaturen im Bereich von 180 bis 220°C (und vollem Wasserstrahlvakuum polykondensiert wird bis eine Säurezahl von kleiner 1,5 mg KOH / g erhalten wird.

9. Eine bei Raumtemperatur klare Mischung enthaltend ≥50 Gew.-Teile an Poly(diethylenglykol)adipat und ≤50 Gew.-Teile der Polyetheresterpolyole nach einem der Ansprüche 1 bis 5.

10. Verfahren zur Herstellung der Mischung nach Anspruch 9 durch Mischen des Poly(diethylenglykol)adipats mit den Polyetheresterpolyolen nach einem der Ansprüche 1 bis 5.

11. Verfahren zur Herstellung eines PUR-Polyesterweichschaumstoffes umfassend die Schritte
a) Umsatz der Mischung nach Anspruch 9 mit
b) einer polyisocyanathaltigen Komponente,
c) einem Treibmittel,
d) einem oder mehreren Katalysator und
e) gegebenenfalls Flammschutzmitteln und/oder weiteren Hilfs- und Zusatzstoffen.

12. PUR-Polyesterweichschaumstoff erhältlich nach dem Verfahren nach Anspruch 11.

13. Verfahren zur Herstellung eines Verbundmaterials, bei dem der PUR-Polyesterweichschaumstoff nach Anspruch 12 mit einem Textil oder einer Deckschicht über ein Oberflächenschmelzverfahren oder ein geeignetes Klebeverfahren kaschiert wird.

14. Textil- und/oder Deckschicht-Schaumstoffverbund, enthaltend PUR-Polyesterweichschaumstoff gemäß Anspruch 12.
